# EUROPÄISCHE PATENTSCHRIFT

(11) **EP 1 397 191 B1**
(45) Veröffentlichungstag und Bekanntmachung des Hinweises auf die Patenterteilung: **09.02.2005**
(21) Anmeldenummer: 02740649.5
(22) Anmeldetag: 25.05.2002
(51) Int. Cl.: B01D 39/12, B01D 39/20, B01D 46/10

(54) **ABGASPARTIKELFILTER AUS SINTERMETALL**
EXHAUST GAS PARTICULATE FILTER MADE OF SINTERED METAL
FILTRE A PARTICULES DE GAZ D'ECHAPPEMENT EN METAL FRITTE

(30) Priorität: 18.06.2001 DE 10128936; 18.06.2001 DE 10128937
(43) Veröffentlichungstag der Anmeldung: 17.03.2004
(73) Patentinhaber: HJS Fahrzeugtechnik GmbH & Co. KG, 58706 Menden (DE); PUREM Abgassysteme GmbH & Co. KG, 59423 Unna (DE)
(72) Erfinder: KOLL, Jochen, D-59755 Arnsberg (DE); FRISSE, Hans-Peter, 52134 Herzogenrath (DE); NEUMANN, Peter, 58706 Menden (DE); JUTKA, Carsten, 58710 Menden (DE); CLAUS, Joachim-Christian, 59302 Oelde (DE)
(74) Vertreter: Schröter & Haverkamp
(86) Internationale Anmeldenummer: PCT/EP2002/005763
(87) Internationale Veröffentlichungsnummer: WO 2002/102492

(56) Entgegenhaltungen:
- EP-A- 0 166 606
- GB-A- 665 292
- GB-A- 933 825
- US-A- 2 423 547

## Beschreibung

Die Erfindung betrifft einen Abgaspartikelfilter aus Sintermetall zur Beseitigung von in dem Abgasstrom einer Brennkraftmaschine, insbesondere eine Dieselbrennkraftmaschine enthaltenen Partikeln, aufgebaut aus einem Filtermaterial mit wenigstens einem Öffnungen aufweisenden Träger aus Metall, an dem poröses Sintermetall durch einen Sinterprozess gebunden ist.

Sintermetallfilter werden eingesetzt als Abgaspartikelfilter für Brennkraftmaschinen etwa von Dieselbrennkraftmaschinen zum Beseitigen von in dem Abgasstrom enthaltenen Partikeln, beispielsweise Russpartikeln. Die in den Abgasstrang einer solchen Brennkraftmaschine eingeschalteten Abgaspartikelfilter müssen nicht nur den Temperaturen des den Abgaspartikelfilter durchströmenden Abgases sondern auch den bei einem Russabbrand zur Regeneration eines solchen Abgasfilters entstehenden Temperaturen standhalten. Diesen Anforderungen genügen Sintermetallfilter. Hergestellt werden derartige Sintermetallfilter durch Umformen von Filtermaterialstreifen zum Ausbilden von Filterplatten oder Filtertaschen, aus denen der Filterkörper hergestellt wird. Die Filterstreifen selbst bestehen üblicherweise aus einem Drahtgewebe als Trägermaterial, das mit einem Sintermetallpulver beschichtet und anschließend einem Sinterprozess unterworfen worden ist. Mit diesem Verfahren lassen sich Sintermetallplatten mit einer Porosität von etwa 50% - 80% herstellen. Zum Verbinden einzelner umgeformter Filterplatten oder Filtertaschen zum Ausbilden des eigentlichen Filterkörpers ist es notwendig, die Einzelelemente durch Fügen, beispielsweise Schweißen miteinander zu verbinden. In EP 0 505 832 B1 ist ein solcher Sintermetallfilter beschrieben, bei dem ein Drahtgewebe als Träger eingesetzt ist. Zur Verbesserung einer Wärmeverteilung und somit insbesondere auch einer Wärmeabfuhr beim Schweißen des Sintermetallmateriales dient als Träger das Köperdrahtgewebe. Gegenüber ansonsten üblichen Drahtgeweben zeichnet sich ein Köperdrahtgewebe dadurch aus, dass zur Erhöhung der Kontaktpunkte der einzelnen Drähte untereinander zusätzliche Drähte mit in das Gewebe eingewoben werden, die als Schussdraht mehrere Kettdrähte jeweils überbrücken. Mit einem solchen Trägermaterial ist durch die erhöhte Anzahl von Kontaktpunkten zwischen den einzelnen Drähten eine Wärmeübertragung von einzelnen Drähten auf andere Drähte durch Erhöhen der Wärmeübergangsstellen gegenüber anderen Drahtgeweben verbessert. Jedoch erhöht sich durch die Implementierung zusätzlicher Drähte zur Ausbildung des Gewebes auch seine Steifigkeit und sein Gewicht. Dieses wirkt sich wiederum nachteilig auf den notwendigen, zum Erstellen von Filterplatten oder Filtertaschen notwendigen Umformprozess aus. Zur Umformung werden daher im Vergleich zu solchen Filtermaterialabschnitten mit anderen Geweben als Trägermaterial höhere Umformkräfte benötigt. Es kann daher vorkommen, dass das auf das Köperdrahtgewebe aufgebrachte Sintermaterial aufgrund seiner gegenüber dem Trägermaterial durch die Porösität reduzierten Festigkeit Eigenschaften und den notwendigen zum Durchführen des Umformvorganges bereitzustellenden Kräften beschädigt wird oder sogar abplatzt.

In DE 195 20 146 C1 ist ein Verfahren zur Herstellung von porösen Körpern, etwa von Abgaspartikelfiltern beschrieben, gemäß dem in einem ersten Verfahrensschritt ein Trägermaterial umgeformt wird, bevor dieses durch Flammspritzen soweit beschichtet wird, dass die in dem Trägermaterial befindlichen Öffnungen sich zugesetzt haben. Dieses Dokument lehrt somit, zunächst das Trägermaterial der Filterplatte oder der Filtertasche in ihre entsprechende Form zu bringen und diesen Körper dann mit dem eigentlichen Filtermaterial zu beschichten. Abgesehen davon, dass dieses Verfahren zum Herstellen von Sintermetallfiltern ungeeignet ist, würde eine Verwendung dieses Verfahrens zum Herstellen von Sintermetallfiltern allenfalls den Vorteil bringen, dass bei der Umformung gegenüber anderen Verfahren die auf den Träger aufgebrachte Sintermetallschicht und das Schweißen zum Erstellen des Filterkörpers aus einzelnen zuvor umgeformten Teilen vermieden wäre. Abgaspartikelfilter mit Filterkammern oder Filtertaschen, die nur eine Öffnungsweite von wenigen Millimetern haben oder - als Keilfilter ausgebildet - sich sogar verjüngen, können mit dem in diesem Dokument beschriebenen Verfahren jedoch nicht hergestellt werden. Überdies besteht die Gefahr, daß der gemäß diesem Dokument erstellte Verbund zwischen dem Träger und dem aufgetragenen Material auch infolge der großen Temperaturschwankungen bei Abgas- und Regenerationstemperaturen gegenüber den Temperaturen im Nichtbetriebszustand Schaden nimmt wird.

Aus EP 0 166 606 B1 ist ein poröser Metallgegenstand, einsetzbar als Filter beschrieben. Bei diesem porösem Gegenstand dient ein Metallträger mit Öffnungen als Träger für in die Öffnungen eingebrachtes Sintermetallpulver, welches während des Prozesses des Sinterns untereinander und mit dem Träger verbacken wird. Als Träger zum Ausbilden dieses Filtermaterials sind Träger aus Metall mit Öffnungen gleich welcher Natur beschrieben worden, wobei in diesem Dokument auch auf Streckmetall als gleichwertiger Träger zu einem Träger aus einem ansonsten üblicherweise eingesetzten Drahtgewebe erwähnt ist. Gegenstand dieses Dokumentes ist das Füllen der Öffnungen des Trägers mit einem geeigneten Metallpulver, um auf diese Weise einen Metallfilter bereitzustellen, mit dem auch feinkörnige Partikel aus einem Massenstrom entfernt werden können. Allerdings ist in diesen Dokumenten nicht offenbart, daß es zweckmäßig sein könne, einen nach dem in diesem Dokument beschriebenen Verfahren hergestellten Filterkörper als Sintermetallfilter zur Beseitigung von in dem Abgasstrom einer Brennkraftmaschine enthaltenen Partikeln einzusetzen. Somit offenbart dieses Dokument auch keinerlei Hinweise darauf, wie ein solcher Sintermetallfilter zweckmäßig auszubilden wäre.

Ausgehend von dem zuvor diskutierten Stand der Technik liegt der Erfindung daher die Aufgabe zugrunde, einen Sintermetallfilter der eingangs genannten, gattungsgemäßen Art dergestalt weiterzubilden, dass das zum Aufbau des Sintermetallfilters eingesetzte Filtermaterial zum Bereitstellen unterschiedlicher Sintermetallfilterkörper nicht nur quasi wie ein Vollmaterial umformbar ist, sondern auch leichter verschweißt werden kann.

Diese Aufgabe wird erfindungsgemäß dadurch gelöst, dass der Träger 1 ein Streckmetall ist und somit die die Öffnungen Ö des Trägers 1 begrenzenden Abschnitte in einem stofflichen Verbund miteinander stehen und der Träger 1 nach dem Vorgang des Streckens um einen Betrag, der 70% nicht überschreitet, kalandriert worden ist.

Bei dem beanspruchten Sintermetallfilter besteht der Träger aus einem eine stoffliche Einheit bildenden Material - einem Streckmetall. Das Vorsehen eines Streckmetalls als Träger hat durch seine stoffliche Einheit zum Einen den Vorteil, dass eine Wärmeverteilung innerhalb des daraus gebildeten Filters und somit eine Wärmeabfuhr beim Schweißen und auch bei einer Regeneration des Sintermetallfilters verbessert ist, da im Gegensatz zum vorbekannten Stand der Technik für den notwendigen Wärmetransport Wärmeübergänge innerhalb des Trägers infolge der stofflichen Einheit vermieden sind. Die Ausbildung des Trägers Streckmetall hat ferner Vorteile beim Umformen, insbesondere wenn Prägungen, wie beispielsweise Sicken oder dergleichen erstellt werden sollen. Infolge der stofflichen Einheit besteht bei einem solchen Sintermetallelement im Gegensatz zum vorbekannten Stand der Technik nicht die Gefahr, dass infolge des Umformvorganges einzelne Drähte eines Gewebes sich gegeneinander verschieben, was Ab- oder Ausplatzungen von Sintermetall zur Folge haben könnte. Somit ist dieses Trägermaterial sehr formstabil, insbesondere auch während des Umformprozesses. Ohne Einbußen hinsichtlich der Wärmeverteilung bzw. Wärmeabfuhr hinnehmen zu müssen, kann der Träger für das Sintermaterial eine relativ große Öffnungsweite aufweisen, was sich günstig auf den Abgasgegendruck auswirkt, da der Oberflächenanteil des Trägermaterials an der Filterfläche reduziert werden kann.

Das Streckmetall ist nach seinem Streckvorgang kalandriert worden und zwar um nicht mehr als 70%. Dadurch ist sichergestellt, daß auch nach dem Kalandriervorgang die Stege des Streckmetalls eingefassten Öffnungen eine ausreichende Widerlagerfläche bereitstellen, damit in den Öffnungen aufgenommenes Sintermetall formschlüssig darin gehalten ist, insbesondere um den Anforderungen beim bestimmungsgemäßen Einsatz des Sintermetallfilters zu genügen.

Das Gewichtsverhältnis der am Aufbau des Filtermateriales mitwirkenden Komponenten - Träger und Sintermetall - ist zweckmäßigerweise kleiner als 3 : 7 Träger : Sintermetall), bevorzugt liegt dieses Verhältnis zwischen 2 : 8 und 1 : 9, wobei bei diesen Verhältnisangaben davon ausgegangen ist, dass sich allein in den Öffnungen des Trägers Sintermetallpulver befindet. Sind jedoch sehr hohe Stailitätsanforderungen den den Abgaspartikelfilter gestellt, dann können duchaus auch Verhältnisse von ca. 1 : 1 zu Einsatz kommen. Die Ausbildung eines Filtermateriales mit einem solche geringen Trägermaterialanteil ist mit herkömmlichen Trägern aus Geweben nicht realisierbar, zumindest nicht mit den bei dem Filtermaterial gemäß der Erfindung sich einstellenden Festigkeitswerten.

Als Trägermaterial wird bevorzugt ein Streckmetall eingesetzt. Von Vorteil ist zum einen, dass dieses eine besonders gute gleichmäßige Formstabilität in unterschiedlichen Richtungen aufweist sowie einfach und kostengünstig in seiner Herstellung ist. Von besonderem Vorteil bei Einsatz eines Streckmetalls als Träger ist ferner, dass durch den einheitlich oberen und unteren Abschluss der einzelnen, eine Öffnung definierenden Bereiche das Sintermaterial keine durchgehend statisch wirksame Schicht auf dem Träger ausgebildet werden muß, sondern dieses lediglich in die Öffnungen des Trägers einzubringen ist. Dies senkt nicht nur die Menge des benötigten Sintermateriales, sondern hat zum Vorteil, dass im Wesentlichen beim Umformen die sich zwischen den Öffnungen befindlichen Stege des Streckmetalls umgeformt werden und nicht oder nur sehr untergeordnet das in die Öffnungen eingebrachte Sintermaterial. Daher können Umformschritte, wie beispielsweise ein Kanten um 90° oder auch um 180° durchgeführt werden, ohne dass die Gefahr besteht, das in die Öffnungen eingebrachtes Sintermaterial heraus bricht. Ein solches Kanten kann erforderlich sein, um den Randbereich einer Filterplatte zu verstärken oder auch um eine Materialverdickung zum anschließenden Schweißen ausbilden zu können.

Bei Vorsehen eines Trägers aus Streckmetall ist zudem von Vorteil, daß durch den Streckprozess die zur Ausbildung der gitterförmigen Struktur notwendigen Öffnungen unterschiedliche Dimensionierungen aufweisen können. Erreicht werden kann dies durch den Grad des Streckens und/oder durch Einbringen unterschiedlicher Einschnitte vor dem eigentlichen Streckvorgang. Auf diese Weise können Elemente für einen Sintermetallfilter bereitgestellt werden, die eine unterschiedliche Öffnungsgeometrie in Abhängigkeit von ihrer Anordnung innerhalb des Sintermetallfilterkörpers aufweisen.

Bei Vorsehen eines Streckmetalls als Träger ist durch den Grad des Streckens neben der Öffnungsweite der Öffnungen des Trägers auch die Neigung der Stege zum Halten der Sintermetallfüllungen vorgebbar. Über den Schritt des Kalandrierens ist die Dicke einstellbar. Somit kann ein und dasselbe Ausgangsmaterial eingesetzt werden, um daraus Filtermaterialstreifen unterschiedlicher Ausbildung herzustellen zu können. Die Dicke eines solchen Filtermaterialstreifens ist bestimmt durch den Aufrichtegrad der die Öffnungen begrenzenden Stege des Trägers, so dass gegenüber Geweben, bei denen die Dicke durch die Dicke des eingesetzten Drahtes bestimmt ist, auch bezüglich ihrer Stärke dickere Filtermaterialstreifen hergestellt werden können, ohne dass der Anteil des Trägermateriales am Gesamtgewicht des Filtermaterialstreifens über Maßen zunimmt.

Nachfolgend ist die Erfindung anhand eines Ausführungsbeispiels unter Bezugnahme auf die beigefügten Figuren beschrieben. Es zeigen:
- **Figur 1:**: Eine schematisierte Darstellung eines Ausschnittes eines Trägers eines Filtermaterials zum Ausbilden eines Sintermetallfilters und
- **Figur 2:**: einen schematisierten Schnitt entlang der Linie A - B durch einen größeren Ausschnitt des Trägers der Figur 1, dessen Öffnungen mit Sintermetallpulver gefüllt sind.

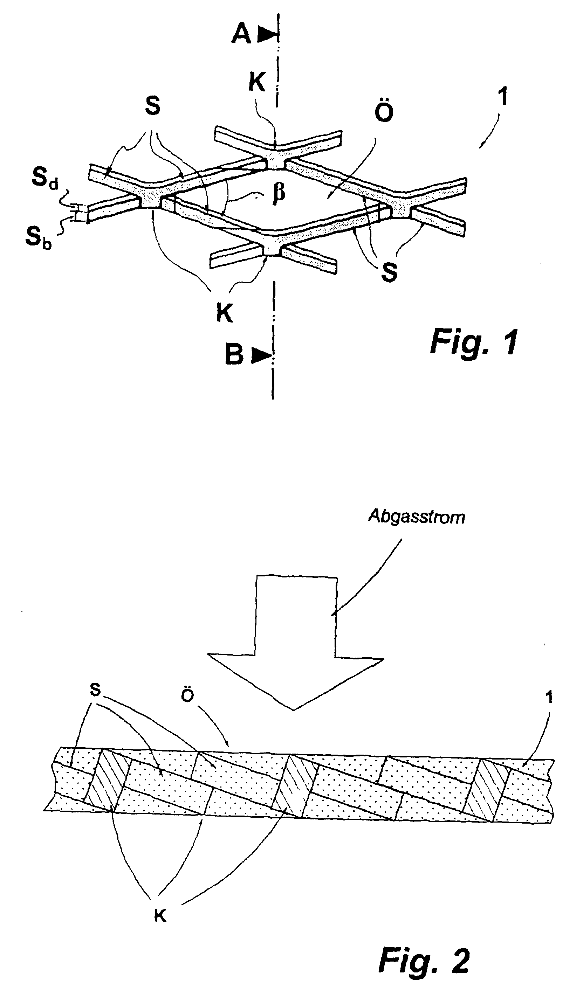

Ein Träger 1 zur Ausbildung von Filtermaterial für einen Sintermetallfilter zur Beseitigung von in dem Abgasstrom einer Dieselbrennkraftmaschine enthaltenden Partikeln ist aus Streckmetall hergestellt. Bei dem Träger 1 handelt es sich um ein Stahlblech als Ausgangsmaterial, in das zum Erstellen der Öffnungen im Wege des Streckvorganges Einschnitte eingebracht sind. Im Zuge eines Streckvorganges ist das Stahlblech in die in Figur 1 gezeigte Form gebracht worden, wobei sich die ursprünglich in das Stahlblech eingebrachten Einschnitte zu Öffnungen Ö erweitert haben. Die Öffnungen Ö sind durch als Stege S bezeichnete Abschnitte des ursprünglichen Stahlbleches begrenzt, die jeweils in denjenigen Bereichen des Trägers zusammenlaufen, in denen die Einschnitte enden. Diese Bereiche sind als Knotenpunkte K bezeichnet. Sämtliche Stege S des Trägers 1 befinden sich somit über die Knotenpunkte K in einem stofflichen Verbund miteinander. Dies ermöglicht die Ausbildung eines Trägers, der nicht nur eine besonders gute Wärmeabfuhr und Wärmeverteilung gewährleistet, sondern der auch bei einem sehr geringen Trägermaterialeinsatz eine sehr hohe und in unterschiedlichen Richtungen gleichmäßige Stabilität aufzuweisen vermag.

Der Öffnungswinkel β zwischen zwei durch einen Einschnitt getrennten Stegen S liegt zweckmäßiger Weise im Bereich zwischen 40° und 80°, bevorzugt zwischen 50° und 70°. Bei kleineren Öffnungswinkel ist die Öffnung so klein, daß das Filtermaterial einen zu hohen Abgasgegendruck bereitstellen würde.

Der Aufbau des Trägers 1 ist vergrößert in dem Querschnitt der Figur 2 erkennbar. Die dargestellte Schnittlinie durchkreuzt mehrere Knotenpunkte K, von denen sich jeweils Stege S zum nächsten Knotenpunkt K erstrecken. Die Stege S selbst sind, wie durch die Knotenpunkte K dargestellt, verkippt und bilden Öffnungen Ö mit geneigten Seitenflächen. Diese geneigten Seitenflächen gestatten eine besonders gute Verklammerung des darin eingebrachten Sintermetalls, wie dieses angedeutet in Figur 2 dargestellt ist. Jede Öffnung Ö ist mit Sintermetall verfüllt, wobei durch den in Figur 2 gezeigten Querschnitt erkennbar ist, dass die Sintermetallfüllungen jeweils formschlüssig in einer durch den Träger 1 bereitgestellten Öffnung Ö gehalten sind. Somit bietet der Träger 1 mit seinen Öffnungen Ö gute mechanische Verklammerungseigenschaften und ein wirksames Widerlager, so dass das in die Öffnungen eingebrachte Sintermaterial trotz Druckdifferenz zwischen der anströmseitigen Filterseite und der abströmseitigen Filterseite nicht die Gefahr besteht, dass das Sintermetall aus einzelnen Öffnungen herausgedrückt wird. Die Sintermetallfüllungen sind somit inselkförmige Aggregate, aufgenommen jeweils in den Öffnungen Ö des Trägers 1.

Die Stärke des ursprünglichen Stahlbleches zur Ausbildung des Trägers 1 entspricht der Schmalseite eines Knotenpunktes K bzw. der Stegdicke S_{d}. Das Verhältnis von Stegbreite S_{b} zu Stegdicke S_{d} beträgt zweckmäßigerweise 1. Bei einem solchen Verhältnis sind die Stege im Querschnitt quadratisch, Um einen ausreichenden Formschluß mit dem Sintermetall zu erzielen können die Stege auch Stegbreiten-Stegdicken-Verhältnisse zwischen 0,5 und 2,0 aufweisen.

Der innige mechanische Verbund der am Aufbau des Trägers 1 beteiligten Stege S und Knotenpunkte K macht deutlich, daß der Träger 1 hohen mechanischen Beanspruchungen standzuhalten vermag. Da der Träger 1 eine stoffliche Einheit ausbildet und gegenüber dem Sintermetall leichter verformbar ist, erfolgt ein Umformen maßgeblich an den Stegen S und Knotenpunkten K für den Fall, dass das Filtermaterial etwa durch Kanten oder durch Einprägen von Sicken umgeformt wird.

Zur Verbessung der Bindungseigenschaften zwischen dem Sintermetallpulver beim Sintern und dem Träger ist es zweckmäßig, die Oberfläche des Trägers mit einer Strukturierung zu versehen, etwa einer Mikrostrukturierung, erstellt durch eine chemische Behandlung oder einen Strahlprozess mit Partikeln. Durch einen solchen Strahlprozess läßt sich überdies eine gewisse Eigenspannung in den Träger einbauen (Spannungstrahlen), was sich günstig auf seine Stabilität auswirkt. Mit einer solchen Maßnahme wird die wirksame Oberfläche des Trägers vergrößert, insbesondere auch in den zueinander weisenden Seitenflächen der die Öffnungen einfassenden Stege, so daß auch eine Verklammerung des Sintermetallpulvers an den Stegen des Trägers möglich ist.

Die Kornfraktion bzw. Partikelgröße des eingesetzten Sintermetallpulvers ist so bemessen, daß zumindest 10 Pulverlagen vorliegen sollten, um eine Öffnung Ö des Trägers 1 in Richtung der Stärke des Trägers 1 auszufüllen. Es hat sich jedoch als ausreichend herausgestellt, zur Ausbildung von Sintermetallfiltern zur Beseitigung von in dem Abgasstrom einer Brennkraftmaschine enthaltenen Partikeln die Öffnungen Ö des Trägers 1 mit Sintermetallpulver in einer Korngröße zu füllen, das maximal 15 Pulverlagen in Richtung der Dicke des daraus gebildeten Filtermaterials vorliegen.

Als Ausgangsmaterial kann beispielsweise ein Stahlblech mit einer Stärke von 0,2 mm eingesetzt sein. Nach dem Durchführen des Streckvorganges kann je nach Konfigurierung und Anordnung der Einschnitte die Dicke des daraus gebildeten Trägers 3 mm betragen, wobei festzuhalten ist, dass unabhängig von der Dicke beim Streckvorgang sich das Trägergewicht nicht erhöht. Im Bedarfsfalle kann das gestreckte Material kalibriert werden, beispielsweise auf eine Stärke von 0,9 mm, was einer Kalibrierung von 70 % entspricht.

### Bezugszeichenliste

- 1: Träger

- K: Knotenpunkt
- Ö: Öffnung
- S: Steg
- S_{b}: Stegbreite
- S_{d}: Stegdicke

- β: Öffnungswinkel

## Patentansprüche

1. Abgaspartikelfilter aus Sintermetall zur Beseitigung von in dem Abgasstrom einer Brennkraftmaschine, insbesondere eine Dieselbrennkraftmaschine enthaltenen Partikeln, aufgebaut aus einem Filtermaterial mit wenigstens einem Öffnungen (Ö) aufweisenden Träger (1) aus Metall, an dem poröses Sintermetallpulver durch einen Sinterprozess gebunden ist, **dadurch gekennzeichnet, dass** der Träger (1) ein Streckmetall ist und somit die die Öffnungen (Ö) des Trägers (1) begrenzenden Abschnitte in einem stofflichen Verbund miteinander stehen und der Träger (1) nach dem Vorgang des Streckens um einen Betrag, der 70% nicht überschreitet, kalandriert worden ist.

2. Abgaspartikelfilter nach Anspruch 1, **dadurch gekennzeichnet, dass** der Träger um nicht mehr als 50% kalandriert worden ist.

3. Abgaspartikelfilter nach Anspruch 1 oder 2, **dadurch gekennzeichnet, dass** das Verhältnis von Trägergewicht zu Sintermetallgewicht bezogen auf das Gesamtgewicht des Filtermateriales kleiner 3 : 7 ist.

4. Abgaspartikelfilter nach Anspruch 3, **dadurch gekennzeichnet, dass** das Verhältnis von Trägergewicht zu Sintermetallgewicht bezogen auf das Gesamtgewicht des Filtermateriales zwischen 2 : 8 und 1 : 9 beträgt.

5. Abgaspartikelfilter nach einem der Ansprüche 1 bis 3, **dadurch gekennzeichnet, dass** das Sintermetall im wesentlichen nur die Öffnungen (Ö) des Trägers (1) ausfüllt sind.

6. Abgaspartikelfilter nach einem der Ansprüche 1 bis 5, **dadurch gekennzeichnet, dass** der Abgaspartikelfilter aus einzelnen Elementen aus dem Filtermaterial, etwa Taschen besteht, deren zu verbindende Randabschnitte durch ein oder mehrere Kantvorgänge umgeformt sind.

7. Abgaspartikelfilter nach einem der Ansprüche 1 bis 6, **dadurch gekennzeichnet, dass** Elemente des aus dem Filtermaterial hergestellten Abgaspartiklelfilters durch einen Prägevorgang, etwa zur Ausbildung von Sicken oder Versteifungselementen geprägt sind.

8. Abgaspartikelfilter nach einem der Ansprüche 1 bis 7, **dadurch gekennzeichnet, dass** die Pulverfraktion des eingesetzten Sintermetallpulvers dergestalt ausgelegt ist, dass in Anpassung an die jeweilige Dicke des Trägers in einer Öffnung mindestens 10 Pulverlagen vorliegen.

9. Abgaspartikelfilter nach einem der Ansprüche 1 bis 8, **dadurch gekennzeichnet, dass** der Öffnungswinkel einer Öffnung des Trägers zwischen 40° und 80° liegt.

10. Abgaspartikelfilter nach einem der Ansprüche 1 bis 9, **dadurch gekennzeichnet, dass** das Verhältnis zwischen Stegbreite (S_{b}) und Stegdicke (S_{d}) des Trägers (1) zwischen 0,5 und 2,0, bevorzugt 1,0 oder etwa 1,0 beträgt.

11. Abgaspartikelfilter nach einem der Ansprüche 1 bis 10, **dadurch gekennzeichnet, dass** die Oberfläche des Trägers zur Verbesserung einer Verklammerung zwischen dem Sintermetall und dem Träger strukturiert, insbesondere mikrostrukturiert ist.

## Claims

1. Exhaust gas particulate filter of sintered metal for eliminating particulates contained in the exhaust gas stream of an internal combustion engine, in particular a Diesel internal combustion engine, structured of a filter material with at least one support (1), including openings (O), of metal on which is bound porous sintered metal powder in a sintering process, **characterized in that** the support (1) is an expanded metal and consequently the segments bounding the openings (O) of support (1) are materially connected with one another and the support (1), after the process of expansion by an amount not exceeding 70%, has been calendered.

2. Exhaust gas particulate filter as claimed in claim 1, **characterized in that** the support has not been calendered by more than 50%.

3. Exhaust gas particulate filter as claimed in claim 1 or 2, **characterized in that** the ratio of weight of the support to that of the sintered metal is less than 3 : 7 relative to the total weight of the filter material.

4. Exhaust gas particulate filter as claimed in claim 3, **characterized in that** the ratio of weight of the support to that of the sintered metal is between 2 : 8 and 1 : 9 relative to the total weight of the filter material.

5. Exhaust gas particulate filter as claimed in one of claims 1 to 3, **characterized in that** the sintered metal essentially only fills out the openings (O) of support (1).

6. Exhaust gas particulate filter as claimed in one of claims 1 to 5, **characterized in that** the exhaust gas particulate filter is comprised of individual elements of the filter material, for example pockets, whose margin segments to be connected are reshaped by one or several turning-on-edge processes.

7. Exhaust gas particulate filter as claimed in one of claims 1 to 6, **characterized in that** elements of the exhaust gas particulate filter produced of the filter material are stamped by a stamping process, for example for the formation of reinforcing creases or reinforcing elements.

8. Exhaust gas particulate filter as claimed in one of claims 1 to 7, **characterized in that** the powder fraction of the employed sinter metal powder is laid out such that, in adaptation to the particular thickness of the support, at least 10 powder layers are provided in one opening.

9. Exhaust gas particulate filter as claimed in one of claims 1 to 8, **characterized in that** the opening angle of an opening of the support is between 40° and 80°.

10. Exhaust gas particulate filter as claimed in one of claims 1 to 9, **characterized in that** the ratio between web width (S_{b}) and web thickness (S_{d}) of the support (1) is between 0.5 and 2.0, preferably between 1.0 or approximately 1.0.

11. Exhaust gas particulate filter as claimed in one of claims 1 to 10, **characterized in that** the surface of the support is textured, in particular microtextured, to improve the bracing between the sintered metal and the support.

## Revendications

1. Filtre à particules de gaz d'échappement en métal fritté destiné à éliminer les particules contenues dans les gaz d'échappement d'une machine à combustion, notamment une machine à combustion de diesel, construit en matériau de filtrage constitué d'au moins un porteur (1) en métal présentant des ouvertures (Ö), sur lequel est fixé par un processus de frittage, du métal fritté poreux, **caractérisé en ce que** le porteur (1) est un métal déployé et que les tronçons délimitant les ouvertures (Ö) du porteur (1) sont liés entre eux par leur matière et que le porteur (1) a été calandré après l'étape d'étirage selon une proportion ne dépassant pas 70 %.

2. Filtre à particules de gaz d'échappement selon la revendication 1 **caractérisé en ce que** le porteur n'a pas été calandré à plus de 50 %.

3. Filtre à particules de gaz d'échappement selon la revendication 1 ou 2 **caractérisé en ce que** le rapport du poids du porteur par rapport au poids du métal fritté est inférieur à 3 : 7 si l'on se réfère au poids total du matériau de filtrage.

4. Filtre à particules de gaz d'échappement selon la revendication 3 **caractérisé en ce que** le rapport du poids du porteur par rapport au poids du métal fritté est situé entre 2 : 8 et 1 : 9 si l'on se réfère au poids total du matériau de filtrage.

5. Filtre à particules de gaz d'échappement selon l'une des revendications 1 à 3 **caractérisé en ce que** le métal fritté ne remplit sensiblement que les ouvertures (Ö) du porteur (1).

6. Filtre à particules de gaz d'échappement selon l'une des revendications 1 à 5 **caractérisé en ce que** le filtre à particules de gaz d'échappement est constitué d'éléments individuels de matériau de filtrage, par exemple des poches, dont les tronçons périphériques à relier sont formés par un ou plusieurs processus de pliage.

7. Filtre à particules de gaz d'échappement selon l'une des revendications 1 à 6 **caractérisé en ce que** les éléments du filtre à particules de gaz d'échappement fabriqués en matériau de filtrage font l'objet d'un processus de matriçage par exemple pour réaliser des moulures ou des éléments de renforcement.

8. Filtre à particules de gaz d'échappement selon l'une des revendications 1 à 7 **caractérisé en ce que** la granulométrie de la poudre de métal fritté mise en oeuvre est sélectionnée de telle sorte qu'après adaptation à l'épaisseur du porteur, il y a présence d'au moins 10 couches de poudre dans une ouverture.

9. Filtre à particules de gaz d'échappement selon l'une des revendications 1 à 8 **caractérisé en ce que** l'angle d'ouverture d'une ouverture du porteur est situé entre 40° et 80°.

10. Filtre à particules de gaz d'échappement selon l'une des revendications 1 à 9 **caractérisé en ce que** le rapport entre la largeur des entretoises (S_{b}) et l'épaisseur des entretoises (S_{d}) du porteur (1) se situe entre 0,5 et 2,0, et est de préférence de 1,0 ou à peu près de 1,0.

11. Filtre à particules de gaz d'échappement selon l'une des revendications 1 à 10 **caractérisé en ce que** la surface du porteur est structurée, notamment microstructurée, afin d'améliorer l'accrochage entre le métal fritté et le porteur.
